# EUROPÄISCHE PATENTSCHRIFT

(11) **EP 2 370 270 B1**
(45) Veröffentlichungstag und Bekanntmachung des Hinweises auf die Patenterteilung: **13.02.2013**
(21) Anmeldenummer: 09778898.8
(22) Anmeldetag: 01.12.2009
(51) Int. Cl.: B44C 5/04, B32B 29/00, E04F 15/00, C09D 7/12, B27N 7/00, D21H 27/28

(54) **VERSCHLEISSSCHUTZSCHICHT AUF BASIS EINER KUNSTHARZMATRIX, VERFAHREN ZU IHRER HERSTELLUNG SOWIE IHRE VERWENDUNG**
WEAR PROTECTION COATING BASED ON A SYNTHETIC RESIN MATRIX, METHOD FOR THE PRODUCTION THEREOF, AND USE THEREOF
COUCHE DE PROTECTION CONTRE L'USURE À BASE D'UNE MATRICE EN RÉSINE ARTIFICIELLE, PROCÉDÉ DE PRODUCTION ET UTILISATION

(30) Priorität: 08.12.2008 DE 102008060695; 22.06.2009 DE 102009030101
(43) Veröffentlichungstag der Anmeldung: 05.10.2011
(73) Patentinhaber: Center for Abrasives and Refractories Research & Development C.A.R.R.D. GmbH, 9524 Villach (AT)
(72) Erfinder: DIDAVIDE, Maria, Cristina, 6260 Reiden (Kanton Luzern) (CH); KUNZ, Reiner, 79725 Laufenburg (DE)
(74) Vertreter: Haseltine Lake LLP
(86) Internationale Anmeldenummer: PCT/EP2009/008555
(87) Internationale Veröffentlichungsnummer: WO 2010/075922

(56) Entgegenhaltungen:
- EP-A1- 1 634 995
- EP-A2- 1 339 545
- WO-A1-2006/013469
- WO-A1-2008/128702

## Beschreibung

Die vorliegende Erfindung betrifft eine Verschleißschutzschicht auf Basis einer Kunstharzmatrix, ein Verfahren zu ihrer Herstellung sowie ihre Verwendung.

Es ist allgemein bekannt, Oberflächen von Möbeln, Fußböden, Keramiken oder sonstigen Gebrauchsgegenständen aus den unterschiedlichsten Werkstoffen zu versiegeln, um einerseits die Oberfläche zu schützen und andererseits der Oberfläche.ein dekoratives Aussehen zu verleihen. Um die Empfindlichkeit der Oberfläche gegenüber mechanischer, thermischer oder chemischer Beanspruchung herabzusetzen und ihr gleichzeitig ein dekoratives Aussehen zu verleihen, werden die unterschiedlichsten Matrixwerkstoffe eingesetzt, wobei es sich häufig um duroplastische, thermoplastische oder elastomere Kunststoffe handelt, die unter Temperatureinwirkung oder Bestrahlung härtbar sind.

Es ist auch allgemein bekannt, den Oberflächen von Möbeln, Fußböden etc. durch Aufbringen von sogenannten Hochdrucklaminaten ein dekoratives Aussehen zu verleihen. Das Laminat besteht dabei meistens aus drei unterschiedlichen Schichten, nämlich einem gefärbten oder bedruckten Dekorpapier, einem darüber liegenden transparenten Overlay-Papier und einem oder mehreren darunter liegenden sogenannten Kernpapieren, die als Träger für das Dekorpapier und das Overlay-Papier dienen. Üblicherweise sind alle drei Papiere mit einem hitzehärtbaren Kunstharz imprägniert.

Weitere Ausführungsformen sind bekannt, bei denen das Dekorpapier mit einem Overlay-Papier bedeckt und direkt auf einer Holzfaserplatte heißverpresst wird. Auch ist ein Verfahren bekannt, bei dem das Dekor auf eine vorbehandelte und grundierte Holzfaserplatte direkt gedruckt und anschließend die Oberfläche mit einem mit Aluminiumoxid versetzten Klarlack auf Basis von Acrylaten beschichtet und dann mittels UV-Licht gehärtet wird.

Als hitze- und/oder strahlenhärtbare Kunstharze bzw. Lacksysteme eignen sich besonders Melaminharze, Harnstoffharze, Phenolharze, Acrylatharze, Epoxyharze, Polyesterharze, Aminoplaste, Polyurethane sowie Mischungen aus diesen Komponenten. In der Vergangenheit wurde immer wieder versucht, die Abriebfestigkeit eines Laminats durch die Einlagerung von Hartstoffpartikeln in die Harzschicht, mit der beispielsweise ein kernimprägniertes Dekorpapier beschichtet wird, zu erhöhen.

So beschreiben eine Vielzahl von Veröffentlichungen entsprechende Verfahren zur Herstellung von abriebfesten Dekorschichten bzw. Laminaten, bei denen vor allem Teilchen auf Basis von Aluminiumoxid als geeignete Hartstoffpartikel zur Herstellung von verschleißfesten Dekorschichten eingesetzt werden. Dabei liegt der bevorzugte Bereich für die mittlere Korngröße der Teilchen üblicherweise zwischen 1 µm und 80 µm.

So beschreibt die US 3,928,706 A die Herstellung von verschleißfesten Dekorschichten, die aus einem Kernpapier, einem Dekorpapier, einer Verschleißschicht und einem Overlay-Papier bestehen. Die Verschleißschicht aus einem hitzehärtbaren Kunstharz mit darin fein verteilten Hartstoffen, die eine Härte nach Mohs von mindestens 7 aufweisen, wird entweder auf einer Oberfläche des Dekor- oder des Overlay-Papiers aufgebracht. Alle drei Papiere sind mit einem hitzehärtbarem Kunstharz imprägniert und werden auf die übliche Weise zu einem einheitlichen Laminat verarbeitet, indem sie bei Temperaturen von ca. 150°C zwischen hochpolierten Pressplatten verpresst werden.

Die EP 0 519 242 A1 beschreibt eine Verschleißschutzschicht von besonderer Klarheit und Brillanz, welche man dadurch erhält, dass man das Dekorpapier mit einer Verschleißschicht versieht, die mit Silan ummantelte Hartstoffe enthält. Auch hier erfolgt die Verarbeitung zum fertigen Laminat durch Verpressen.

In allen Fällen führt die Herstellung von verschleißfesten Laminatoberflächen durch Einlagerung von Hartstoffen auf Dekorpapieren oder auch die Direktbeschichtung mit hartstoffgefüllten Flüssigoverlays zu einem erheblichen Problem bei der Endfertigung der Laminate, weil sowohl beim diskontinuierlichen Betrieb unter Einsatz von Pressen mit hochpolierten Pressplatten als auch beim kontinuierlichen Betrieb mit Pressbändern die Oberflächen der Pressplatten oder Pressbänder durch den Kontakt mit den Hartstoffpartikeln zerkratzt und relativ schnell unbrauchbar gemacht werden. Somit ist der Pressplattenverschleiß ein ganz wesentlicher Kostenfaktor bei der Herstellung von verschleißfesten Dekorschichten.

Versuche, das Verschleißproblem bei der Fertigung zu lösen, liefen meist darauf hinaus, durch geeignete Maßnahmen den direkten Kontakt zwischen Hartstoffpartikeln und Pressplatten zu vermeiden.

So beschreibt die WO 2006/013469 A1 ein Verfahren, bei dem zunächst eine erste Schicht der Hartstoffpartikel auf ein Substrat aufgetragen wird und anschließend auf die erste abriebfeste Schicht eine zweite Polymerschicht aufgetragen wird, in die Teilchen eingelagert sind, die eine geringere Härte, jedoch auch eine geringere Abrasivität aufweisen, wofür beispielsweise Glaskugeln oder Glasfasern in Frage kommen.

Einen ähnlichen Weg beschreibt die EP 1 319 524 A1, in der die Aufgabe dadurch gelöst wird, dass Lack- oder Tränkharzsysteme eingesetzt werden, die beispielsweise Glaskugeln enthalten, die wie oben erwähnt eine brauchbare Härte, jedoch eine geringe Eigenabrasivität aufweisen.

In der WO 02/066265 A1 wird ein Verfahren zur Herstellung eines Dekorpapiers beschrieben, bei dem abriebfeste Partikel, wie z. B. Korund oder Siliziumcarbid, die im Harz eingelagert sind, in einem zusätzlichen Arbeitsgang mit Glaskugeln oder Glasfasern beschichtet werden, um auf diese Weise den direkten Kontakt der Korund- oder Siliziumcarbidpartikel mit der Spiegeloberfläche der Presse zu vermeiden und Beschädigungen zu verhindern. Dabei sollen die Kugeln oder Fasern den gewünschten Abstand zwischen den abriebfesten Partikeln und der Pressplatte bzw. dem Pressband sicherstellen.

Die EP 1 339 545 B1 beschreibt eine Verschleißschutzschicht auf Basis von Kunstharz, wobei in das Kunstharzsystem neben den Hartstoffpartikeln zusätzlich im Wesentlichen schneidkantenfreie, runde Feststoffpartikel in Form von Kugeln mit einer geringeren Härte als die der Hartstoffpartikel eingelagert werden. Dabei ist der mittlere Teilchendurchmesser der Kugeln größer als der mittlere Korndurchmesser der Hartstoffpartikel. Dadurch wird erreicht, dass der direkte Kontakt der Pressplattenoberfläche mit den Hartstoffpartikeln vermieden wird und die runden Feststoffpartikel quasi als Abstandshalter fungieren.

Die oben beschriebenen Verfahren, die vor allem dem Schutz der Pressplatten dienen, haben den Nachteil, dass nun zwar durch die Einlagerung von Partikeln mit geringer Eigenabrasivität im äußeren Bereich der Dekorschicht die Werkzeuge, Pressplatten oder Pressbänder geschont werden, jedoch die Verschleißfestigkeit der Schicht erfahrungsgemäß herabgesetzt wird.

In der WO 2008/128702 A1 wird eine Verschleißschutzschicht beschrieben, bei der die für die Verschleißfestigkeit verantwortlichen Hartstoffpartikel teilweise durch weniger harte, im Wesentlichen schneidkantenfreie und runde Feststoffpartikel, wie z. B. Vollkugeln aus Glas, ersetzt werden. Dabei ist vorgesehen, dass die Teilchendurchmesser der runden Feststoffpartikel gleich oder kleiner sind als die Teilchendurchmesser der Hartstoffpartikel. Auf diese Weise bleibt die Verschleißfestigkeit der Dekorschicht bis zu einem bestimmten Substitutionsgrad erhalten, wobei die relativ teuren Hartstoffpartikel teilweise durch billigere Glaskugeln ersetzt werden können, und es wird gleichzeitig ein gewisser Schutz für die Pressplatten erreicht. Allerdings hat der Einsatz von gleich großen oder kleineren Glaskugeln den Nachteil, dass zum Schutze der Pressplatten doch wieder zusätzlich Overlay-Papiere eingesetzt werden müssen, was das Herstellverfahren wiederum verteuert.

Es besteht somit weiterhin das Problem, Verschleißschutzschichten sowie Verfahren zu ihrer Herstellung kostenmäßig zu optimieren und dabei die Abriebfestigkeit im Zusammenspiel mit dem durch die Abrasivität der Schicht bedingten Verschleiß der Werkzeuge bei ihrer Herstellung zu optimieren.

Gelöst wird die Aufgabe durch eine Verschleißschutzschicht mit den Merkmalen des Anspruchs 1 sowie ein Verfahren mit den Merkmalen des Anspruchs 16. Vorteilhafte Ausgestaltungen und Weiterentwicklungen sind Gegenstand der jeweils entsprechenden Unteransprüche.

Es konnte festgestellt werden, dass die Verschleißfestigkeit einer Dekorschicht auf Basis einer Kunstharzmatrix durch Einsatz einer Mischung aus ungleichförmigen transparenten Hartstoffpartikeln mit einer Härte nach Mohs von mindestens 6 und transparenten Feststoffpartikeln mit einer Härte nach Mohs von mindestens 3, wobei die transparenten Feststoffpartikel in einer bi-modalen Korngrößenverteilung mit jeweils einer Grobfraktion und einer Feinfraktion vorliegen, erhöht und gleichzeitig der Pressplattenverschleiß bzw. Verschleiß der Pressbänder reduziert werden kann.

Besonders vorteilhafte Ergebnisse können dann erzielt werden, wenn die transparenten Feststoffe zumindest teilweise im Wesentlichen schneidkantenfreie, runde transparente Feststoffpartikel mit einer Rundheit nach Krumbein von mindestens 0.8 und einer Härte nach Mohs von mindestens 3 umfassen.

Dabei erreicht man zusätzlich durch die Substitution von ungleichförmigen transparenten Hartstoffen durch runde transparente Feststoffe eine Verbesserung der Brillanz und Transparenz der Dekorschicht. Darüber hinaus ergibt sich allgemein durch den Ersatz von teuren Hartstoffen durch preiswertere transparente Feststoffe ein wesentlicher Kostenvorteil.

Bei einer bevorzugten Ausgestaltung der vorliegenden Erfindung ist die Härte der Hartstoffpartikel größer als 7 nach Mohs, während diejenige der Feststoffpartikel zwischen 3 und 6 nach Mohs liegt.

Bevorzugt handelt es sich bei den ungleichförmigen transparenten Hartstoffpartikeln um Materialien ausgewählt aus der Gruppe α-Aluminiumoxid, Schmelzkorund, Sinterkorund, hochgeglühte Tonerden oder Sol-Gel-Korund, während es sich bei den transparenten Feststoffpartikeln bevorzugt um Glasperlen handelt. Weiterhin kommen als transparente Feststoffpartikel allerdings auch Aluminiumsilikate oder allgemein gesinterte Keramiken in Frage. Bei der Kunstharzmatrix handelt es sich bevorzugt um duroplastische, thermoplastische oder elastomere Kunststoffe.

Die bi-modale Kornverteilung bei den transparenten Feststoffpartikeln ist so gewählt, dass die mittlere Korngröße der Grobfraktion der transparenten Feststoffpartikel um mindestens 40 % größer ist als die mittlere Korngröße der Feinfraktion der transparenten Feststoffpartikel und dabei maximal den dreifachen Wert der mittleren Korngröße der ungleichförmigen transparenten Hartstoffpartikel aufweist.

Je nach Einsatzgebiet kann der Anteil der Grobfraktion der transparenten Feststoffpartikel, bezogen auf den Gesamtanteil der transparenten Feststoffpartikel, zwischen 5 Gew.-% und 95 Gew.-% liegen. Bei bevorzugten Ausgestaltungen der vorliegenden Erfindung liegt der Anteil der Grobfraktion der transparenten Feststoffpartikel zwischen 10 Gew.-% und 50 Gew.-%, d. h. dass die Grobfraktion maximal die Hälfte der Feststoffpartikel ausmacht, und bei einer besonders bevorzugten Ausgestaltung liegt der Anteil der Grobfraktion zwischen 15 Gew.-% und 30 Gew.-%, wiederum bezogen auf den Gesamtanteil der transparenten Feststoffpartikel.

Da der Zusatz an transparenten Feststoffpartikeln zu den ungleichförmigen transparenten Hartstoffpartikeln je nach Anwendungsgebiet über einen breiten Bereich Eigenschaftsverbesserungen der Dekorschicht bringen kann, ist erfindungsgemäß vorgesehen, dass der Anteil an transparenten Feststoffpartikeln in der eingelagerten Gesamtmischung aus Hart- und Feststoffpartikeln 1 Gew.-% bis 99 Gew.-%, bevorzugt jedoch 20 Gew.-% bis 60 Gew.-%, und besonders bevorzugt 30 Gew.-% bis 50 Gew.- %, bezogen auf den Gesamtanteil der eingelagerten Teilchen, beträgt. Damit soll dokumentiert werden, dass für die üblichen Anwendungen die transparenten Feststoffpartikel im Bereich zwischen 30 Gew.-% und 50 Gew.-%, bezogen auf den Gesamtanteil der eingelagerten Teilchen, eingesetzt werden, es jedoch je nach Anwendungsbereich auch sinnvoll sein kann, deutlich kleinere oder größere Anteile an transparenten Feststoffpartikeln neben den ungleichförmigen Hartstoffpartikeln einzusetzen.

Zusätzlich kann die Transparenz und auch die Farbe der Schicht durch die transparenten Feststoffpartikel beeinflusst werden, wenn diese gemäß einer bevorzugten Ausführungsform der vorliegenden Erfindung ein oder mehrere Oxide, Oxynitride oder Mischoxide aus der Gruppe der Elemente Li, Na, K, Ca, Mg, Ba, Sr, Zn, Al, Si, Ti, Nb, La, Y, Ce oder B umfassen.

Die Gesamtmenge an eingelagertem ungleichförmigen transparenten Hartstoffpartikeln und transparenten Feststoffpartikeln in der Kunstharzmatrix beträgt üblicherweise zwischen 5 Vol.-% und 70 Vol.-%, bezogen auf das Gesamtvolumen der Verschleißschutzschicht. Dabei beträgt die Gesamtmenge an eingelagerten Hartstoffpartikeln und Feststoffpartikeln zwischen 2 g/m² und 100 g/m², bevorzugt 10 g/m² bis 50 g/m².

Es ist bekannt, dass die Transparenz von Verschleißschutzschichten, in denen transparente Hartstoff- oder Feststoffpartikel eingelagert sind, durch eine chemische Oberflächenbehandlung der Hartstoff- oder Feststoffpartikel mit einem organischen oder anorganischen Haftvermittler verbessert werden kann. So sieht eine bevorzugte Ausgestaltung der vorliegenden Erfindung vor, dass die ungleichförmigen transparenten Hartstoffpartikel und die transparenten Feststoffpartikel vor dem Einbringen in die Kunstharzmatrix einer chemischen Oberflächenbehandlung mit einem organischen oder anorganischen Haftvermittler unterzogen werden, wobei der Haftvermittler bevorzugt ein Silan, insbesondere ein Organosilan, wie z.B. ein Aminoalkylsilan oder ein Aminoalkylalkoxysilan, aus der Gruppe Aminopropyltrimethoxysilan, 3-Aminopropyltriethoxysilan, 3-Aminopropylmethyldimethoxysilan, 3-Aminopropylmethyldiethoxysilan und N-(2-Aminoethyl)-3-Aminopropyltrimethoxysilan ist. Dabei beträgt der Anteil an Silan in der Regel zwischen 0.001 Gew.-% und 5 Gew.-%, bezogen auf den Gesamtanteil an Hartstoffpartikeln und Feststoffpartikeln.

Im Rahmen zahlreicher Optimierungsversuche konnte auch festgestellt werden, dass besonders positive Effekte dann erzielt werden, wenn die transparenten ungleichförmigen Hartstoffpartikel und die transparenten Feststoffpartikel in der Kunststoffmatrix in mehreren Lagen übereinander angeordnet sind. Um diese Anordnung zu gewährleisten, kann es, je nach Beladungsdichte der Matrix mit Feststoff- und Hartstoffpartikeln, vorteilhaft sein, die Verschleißschutzschicht in mehreren Schritten (Schichten) aufzutragen.

Somit ist der Gegenstand der vorliegenden Erfindung auch ein Verfahren zur Herstellung einer Verschleißschutzschicht, wobei das Verfahren die folgenden Schritte umfasst:
a) Auftragen einer ersten Harzsuspension als erste Schicht auf eine Oberfläche;
b) Zwischentrocknen der ersten Schicht oder Gelieren der ersten Schicht mittels Strahlung;
c) Auftragen einer zweiten Harzsuspension auf die vorgetrocknete erste Schicht; und
d) Endtrocknen der gesamten Beschichtung oder Aushärten der gesamten Beschichtung mittels Strahlung.

Zum Gelieren und Aushärten können beispielsweise Elektronen- oder UV-Strahlen eingesetzt werden.

Besonders gute Schutzeffekte werden dann erzielt, wenn entweder die erste oder die zweite Harzsuspension die Grobfraktion der transparenten Feststoffpartikel zusammen mit den ungleichförmigen transparenten Hartstoffpartikeln umfasst, während die jeweils andere Harzsuspension die Feinfraktion der transparenten Feststoffpartikel ohne zusätzliche Hartstoffpartikel umfasst.

Insbesondere ist dieses Verfahren geeignet für die Herstellung von mit Dekor versehenen Holzfaserplatten, wobei die Oberfläche für das Auftragen der ersten Suspension in diesem Fall ein kernimprägniertes Dekorpapier ist, das nach einer Zwischentrocknung bei Temperaturen zwischen 120°C und 160°C mit einer zweiten Harzsuspension beschichtet wird, die auf die Schicht mit der ersten vorgetrockneten Harzsuspension aufgetragen wird, wonach dann.ein Endtrocknen ebenfalls in einem Temperaturbereich zwischen 120°C und 160°C erfolgt und anschließend das getrocknete, noch eine Restfeuchte von ca. 5 % bis 9 % enthaltende Dekorpapier auf einer Holzfaserplatte verpresst wird.

Gegenstand der vorliegenden Erfindung ist auch die Verwendung einer Verschleißschutzschicht zur Herstellung von verschleißfesten Oberflächen auf Holzwerkstoffen, auf imprägnierten Dekorpapieren, auf mit Dekor bedruckten Holzfaserplatten, auf Kork, auf CV- und Polyvinylchloridbelägen, auf Parkettfußböden, Fußbodenlaminaten, Möbeloberflächen oder Arbeitsplatten.

Im Folgenden wird die vorliegende Erfindung anhand von ausgesuchten Beispielen ausführlich erläutert.

Als Beispiele wurden Anwendungen im Bereich der Laminate ausgewählt, da in diesem Bereich die Bewertung der Verschleißfestigkeit (Abriebfestigkeit) standardisiert ist und somit eine Vergleichbarkeit der einzelnen Versuche gegeben ist. Diese Auswahl ist allerdings nicht als Einschränkung zu sehen, vielmehr hat es sich im Rahmen der Untersuchung gezeigt, dass sich vergleichbare Verhältnisse auch bei den übrigen angesprochenen Systemen einstellen.

Die oben angesprochenen Standardbedingungen für Laminatböden betreffen den so genannten Taber-Test, mit dem die Beständigkeit gegenüber Abrieb bestimmt wird und die Böden in Abriebklassen unterteilt werden. Bei dieser Prüfung wird die Widerstandsfähigkeit der Deckschicht gegenüber Durchscheuern bestimmt. Der Abrieb wird dadurch erzielt, dass ein Prüfkörper unter belasteten, zylindrischen, mit definiertem Schmirgelpapier belegten Reibrädern rotiert. Dabei wird die bis zu einem festgelegten Grad des Abriebes notwendige Anzahl an Umdrehungen gemessen.

Für diese Prüfung nach DIN EN 13329 werden aus einem Laminatbodenelement Prüfkörper mit einer Größe von etwa 100 mm x 100 mm entnommen und mit einem Markierstift in 4 Quadranten aufgeteilt. Die Oberfläche des Prüfkörpers wird unter genau definierten Bedingungen (Druck, Umdrehung, etc.) mit zwei mit einem definierten Schmirgelpapier belegten Reibrädern bearbeitet, wobei die Schmirgelpapierstreifen nach jeweils 200 Umdrehungen ersetzt werden. Die Prüfung wird so lange fortgesetzt, bis ein so genannter Anfangsabriebpunkt (IP) erreicht ist. Der Anfangsabriebpunkt (IP) ist der Punkt, an dem erstmalig klar erkennbar ein Durchrieb des Dekordrucks auftritt und die Unterschicht in drei der vier Quadranten freigelegt ist. Auf diese Weise werden die Laminatböden in Abriebklassen zwischen AC-1 bis AC-5 eingeteilt, was einem IP-Wert von ≥ 900 bis ≥ 6000 entspricht.

Im Folgenden werden die ausgesuchten Beispiele anhand der Taber-Werte evaluiert, wobei die angegebenen Taber-Werte die Durchschnittswerte von jeweils 4 Taber-Prüfungen sind.

### Beispiele 1 bis 5

Für die Beispiele 1 bis 5 wurden Harzsuspensionen mit folgenden Zusammensetzungen eingesetzt:

### Harzsuspension A

| Menge (g) | Verbindung | Bezeichnung, Hersteller |
|---|---|---|
| 100 | Melaminharz | MF Dynea Prefère, 70 0562L, Firma Dynea, A-Krems |
| 5 | Monoethylglykol | MEG, Firma Roth |
| 0.86 | Härter | MH 188, Firma Melatec, CH-Zug |
| 0.19 | Netzmittel | MN 49/S, Firma Melatec, CH-Zug |
| 0,05 | Trennmittel | MT 673/SP, Firma Melatec, CH-Zug |

Die oben aufgeführte Harzsuspension A wird zum Kernimprägnieren des Dekorpapiers eingesetzt, während die Harzsuspension B, deren Zusammensetzung in der nachfolgenden Tabelle zusammengefasst ist, für das Aufbringen der Hartstoffe bzw. Feststoffe eingesetzt wird.

### Harzsuspension B

| Menge (g) | Verbindung | Bezeichnung, Hersteller |
|---|---|---|
| 100 | Melaminharz | MF Dynea Prefère, 70 0562L, Firma Dynea, A-Krems |
| 6 | Monoethylglykol | MEG, Firma Roth |
| 0.93 | Härter | MH 188, Firma Melatec, CH-Zug |
| 0.6 | Netz- und Dispergiermittel | MP 2000/B, Firma Melatec, CH-Zug |
| 0.5 | Trennmittel | MT 673/SP, Firma Melatec, CH-Zug |

Als ungleichförmiger transparenter Hartstoff wurde Edelkorund Weiß (ALODUR^{®} ZWSK-ST 180, Firma Treibacher Schleifmittel GmbH, D-Laufenburg), eingesetzt, während als transparente Feststoffe Glasperlen der Firmen Swarco und Sovitec eingesetzt wurden. Sowohl die Hartstoff- als auch die Feststoffpartikel wurden vor ihrem Einsatz silanisiert. Im Folgenden sind die Siebanalysen und Schüttdichten der eingesetzten Hart- bzw. Feststoffe tabellarisch zusammengefasst.

**Tabelle 1**

| Sieb (µm) | Hartstoff ALODUR^{®} ZWSK-ST 180 | Feststoff (Grobfraktion) SWARCO 90 - 150 µm | Feststoff (Feinfraktion) SOVITEC 45 - 63 µm |
|---|---|---|---|
| 150 | | 4.8 | |
| 125 | 0 | 44.2 | |
| 106 | 8 | | |
| 90 | 57 | 48.3 | |
| 75 | 28 | 2.0 | 0 |
| 63 | 6 | 0.5 | 0 |
| 53 | | | 16.3 |
| 45 | | | 20.4 |
| 32 | | | 33.1 |
| Boden | 1 | 0.2 | 30.2 |
| SD (g/cm³) | 1.94 | 1.44 | 1.41 |

### Beispiel 1 (Vergleich)

Ein Dekorpapier wurde mit der Harzsuspension A kernimprägniert. Anschließend erfolgte eine Beschichtung des Dekorpapiers mit der Suspension B, die 38 Gew.-% ALODUR^{®} ZWSK-ST 180 als Hartstoff enthielt. Das Dekorpapier wurde dann bei 145°C bis auf eine Restfeuchte von 6.4 % getrocknet. Anschließend wurde das Dekorpapier mit einem mit der Harzsuspension B imprägnierten und getrockneten Overlay-Papier bedeckt und bei 180°C für 12 Sekunden bei einem Druck von 350 N auf eine HDF-Holzfaserplatte verpresst.

### Beispiel 2 (Vergleich)

Analog zu Beispiel 1 wurde ein kernimprägniertes feuchtes Dekorpapier eingesetzt, das mit einer Harzsuspension B, die 38 Gew.-% einer Mischung aus 90 Gewichtsanteilen eines ungleichförmigen transparenten Hartstoffes (ALODUR^{®} ZWSK-ST 180) und 10 Gewichtsanteile Glasperlen (Swarco 90-150 µm) enthielt. Nach dem Trocknen des Dekorpapiers bei 145°C auf eine Restfeuchte von 6.4 % wurde das Dekorpapier mit einem mit der Suspension B imprägnierten und getrockneten Overlay-Papier bedeckt und bei 180 °C für 12 Sekunden bei einem Pressdruck von 350 N auf eine HDF-Holzfaserplatte verpresst.

### Beispiel 3 (Vergleich)

Analog zu Beispiel 2 erfolgte die Beschichtung des kernimprägnierten Dekorpapiers mit der Harzsuspension B, die 38 Gew.-% einer Mischung aus 90 Gewichtsanteilen eines ungleichförmigen transparenten Hartstoffes (ALODUR^{®}ZWSK-ST 180) und 10 Gewichtsanteile runde transparente Feststoffe (Glasperlen Swarco 90-150 µm) enthielt. Nach der Zwischentrocknung für 30 Sekunden bei 145°C erfolgte eine zweite Beschichtung mit einer reinen Harzsuspension B. Nach der Endtrocknung des zweifach beschichteten Dekorpapiers bei 145°C auf eine Restfeuchte von 6.6 % erfolgte die Verpressung des Dekorpapiers auf eine HDF-Holzfaserplatte bei 180°C für 12 Sekunden unter einem Druck von 350 N.

### Beispiel 4 (Vergleich)

Analog zu Beispiel 2 wurde ein kernimprägniertes feuchtes Dekorpapier eingesetzt, das mit einer Harzsuspension B, die 38 Gew.-% einer Mischung aus 50 Gewichtsanteilen eines ungleichförmigen transparenten Hartstoffes (ALODUR^{®}ZWSK-ST 180) und 50 Gewichtsanteilen Glasperlen (Swarco 90-150 µm) enthielt. Nach der Zwischentrocknung für 30 Sekunden bei 145°C erfolgte eine zweite Beschichtung mit einer reinen Harzsuspension B. Nach der Endtrocknung des zweifach beschichteten Dekorpapiers bei 145°C auf eine Restfeuchte von 6.4 % erfolgte die Verpressung des Dekorpapiers auf eine HDF-Holzfaserplatte bei 180°C für 12 Sekunden unter einem Druck von 350 N.

### Beispiel 5 (Erfindung)

Die Kernimprägnierung des Dekorpapiers erfolgte wie in den Beispielen 1 bis 4. Anschließend wurde das kernimprägnierte feuchte Dekorpapier mit einer Harzsuspension B, die 38 Gew.-% einer Mischung aus 85 Gewichtsanteilen eines ungleichförmigen Hartstoffes (ALODUR^{®}ZWSK-ST 180) und 15 Gewichtsanteilen eines runden transparenten Feststoffes (Glasperlen Swarco 90-150 µm) enthielt. Nach einer Zwischentrocknung bei 145°C für 30 Sekunden erfolgte eine zweite Beschichtung mit einer Harzsuspension B, die 35 Gew.-% eines runden transparenten Feststoffes (Glasperlen Sovitec 45-63 µm) enthielt. Nach der Endtrocknung des zweifach beschichteten Dekorpapiers bei 145°C auf eine Restfeuchte von 6.7 % wurde das Dekorpapier auf eine HDF-Holzfaserplatte bei 180°C für 12 Sekunden unter einem Druck von 350 N verpresst.

### Prüfung der Abriebfest-igkeit (Taber-Test)

In der folgenden Tabelle 2 sind die Resultate der Abriebtests der Laminatprüfkörper gemäß den Beispielen 1 bis 5 zusammengefasst.

**Tabelle 2**

| Beispiel | Taber-Werte (IP = Umdrehungen) | | Taber-Werte, bezogen auf 1 g/m² Hartstoff- und Feststoffpartikel | | Taber-Werte, bezogen auf 1 g/m² Hartstoffpartikel (ALODUR ZWSK-ST180) |
|---|---|---|---|---|---|
| | | Belegungsdichte | | (Gew.-% Glasperlen) | |
| 1 | 5.500 | 24 g/m² | 229 | 0.0 Gew.-% | 229 |
| 2 | 5.600 | 25 g/m² | 224 | 10 Gew.-% | 248 |
| 3 | 5.500 | 25 g/m² | 220 | 10 Gew.-% | 244 |
| 4 | 4.000 | 24 g/m² | 167 | 50 Gew.-% | 334 |
| 5 | 5.600 | 26 g/m² | 215 | 50 Gew.-% | 430 |

In der Spalte 2 der Tabelle 2 sind die beim Verschleißtest ermittelten Taber-Werte (IP) zusammen mit der Belegungsdichte (g/m²) wiedergegeben. Bei der Belegungsdichte handelt es sich um die Menge an Hartstoff- plus Feststoffpartikeln pro m² Dekorschicht. Man erkennt, dass bei einem Ersatz von 10 % Hartstoffpartikeln durch Glasperlen bei gleicher Belegungsdichte die Verschleißfestigkeit der Schicht nicht nachlässt. Bei einem Ersatz von 50 Gew.-% der Hartstoffpartikel durch die Grobfraktion der Glasperlen ist ein deutliches Absinken der Abriebfestigkeit zu erkennen (Beispiel 4).

Umso überraschender ist das Ergebnis von Beispiel 5, in dem 50 Gew.-% der Hartstoffe durch Glasperlen ersetzt sind, wobei die Glasperlen in diesem Fall zusätzlich eine bi-modale Kornverteilung aufweisen und die Beschichtung der Dekorschicht darüber hinaus in zwei Schritten vollzogen wurde und dadurch die Fest- und Hartstoffpartikel in mehreren Lagen in der Beschichtung angeordnet sind. So ist trotz der Substitution der Hartstoffe durch Glasperlen generell kein Abfall der Taber-Werte zu erkennen und es wird nahezu eine Verdopplung der Taber-Werte erreicht, wenn man das Ergebnis allein auf den Anteil an eingesetzten Hartstoffpartikeln bezieht.

Dieses Ergebnis bedeutet einen außerordentlichen Fortschritt, da nun bis zu 50 Gew.-% der Hartstoffpartikel durch Glaskugeln ersetzt werden können, ohne dass es zu einer Verschlechterung der Verschleißfestigkeit (Abriebfestigkeit) kommt, wobei neben dem Kostenvorteil, der durch den Ersatz der teuren Hartstoffe durch preiswerte Glasperlen erreicht wird, als weitere Vorteile zu nennen sind, dass die Transparenz und Brillanz der Dekorschicht zunimmt, der Pressplattenverschleiß reduziert werden kann und allgemein die Prozessführung erleichtert wird, da die Verarbeitung der Glasperlen eine geringere Sensitivität des Prozesses erfordert.

### Beispiele 6 bis 9

In den Beispielen 6 bis 9 wurden die gleichen Harzsuspensionen wie in den Beispielen 1 bis 5 eingesetzt.

So erfolgte die Kernimprägnierung des Dekorpapiers mit der Harzsuspension A, während die Beschichtungen anschließend auf Basis der Harzsuspension B durchgeführt wurden.

Auch die Hartstofftypen bzw. Feststofftypen wurden beibehalten, geändert wurden allerdings die Absiebungen. In der folgenden Tabelle 3 sind die Siebanalysen und Schüttdichten der Hart- und Feststoffe zusammengefasst.

**Tabelle 3**

| Sieb (µm) | Hartstoff ALODUR^{®} ZWSK-ST F280 | Feststoff (Grobfraktion) SWARCO 75 - 106 µm | Feststoff (Feinfraktion) SOVITEC 45 - 63 µm |
|---|---|---|---|
| 150 | | | |
| 125 | 0 | 0.1 | |
| 106 | | | |
| 90 | 4.9 | 48.3 | |
| 75 | 9.4 | 37.6 | 0 |
| 63 | | | 0 |
| 53 | 5.3 | 13.7 | 16.3 |
| 45 | 8.9 | 0.2 | 20.4 |
| 32 | | | 33.1 |
| Boden | 71.5 | 0.1 | 30.2 |
| SD (g/cm³) | 1.77 | 1.42 | 1.41 |

### Beispiel 6 (Vergleich)

Analog zu Beispiel 1 wurde ein Dekorpapier zunächst mit der Harzsuspension A kernimprägniert. Anschließend erfolgte die Beschichtung des Dekorpapiers mit der Suspension B, die 48 Gew.-% des ungleichförmigen transparenten Hartstoffes (ALODUR^{®} ZWSK-ST F280) enthielt. Das Dekorpapier wurde dann bei 145°C auf eine Restfeuchte von 6.4 % getrocknet, anschließend mit einem mit der Harzsuspension B imprägnierten und getrockneten Overlay-Papier belegt und dann auf einer HDF-Holzfaserplatte für 12 Sekunden bei 180°C mit einem Druck von 350 N verpresst.

### Beispiel 7 (Vergleich)

Analog zu Beispiel 6 wurde wiederum zunächst das Dekorpapier mit der Harzsuspension A kernimprägniert und anschließend mit der Harzsuspension B beschichtet, die 48 Gew.-% einer Mischung aus 80 Gewichtsanteilen der ungleichförmigen transparenten Hartstoffpartikel (ALODUR^{®} ZWSK-ST F280) und 20 Gewichtsanteilen runder transparenter Feststoffpartikel (Glasperlen, Swarco 75-100 µm) enthielt. Das so beschichtete Dekorpapier wurde anschließend bei 145°C getrocknet und dann mit einem mit der Harzsuspension B imprägnierten und getrockneten Overlay-Papier belegt und für 12 Sekunden bei 180°C und einem Druck von 350 N verpresst.

### Beispiel 8 (Erfindung)

Die Vorbereitung des Dekorpapiers erfolgte wie in allen bisherigen Beispielen, wobei das kernimprägnierte feuchte Dekorpapier anschließend mit einer Harzsuspension B beschichtet wurde, die 40 Gew.-% einer Mischung aus 80 Gewichtsanteilen der ungleichförmigen transparenten Hartstoffpartikel (ALODUR^{®} ZWSK-ST F280) und 20 Gewichtsanteilen runder transparenter Feststoffpartikel (Glasperlen, Swarco 75-106 µm) enthielt. Das so beschichtete Dekorpapier wurde einer Zwischentrocknung bei 145°C unterzogen und 30 Sekunden später einer zweiten Beschichtung unterzogen mit einer Harzsuspension B, die 40 Gew.- % eines runden transparenten Feststoffes (Sovitec 45-63 µm) enthielt. Nach der zweiten Beschichtung wurde eine Endtrocknung des beschichteten Dekorpapiers bei 145°C bis auf eine Restfeuchte von 6.7 % durchgeführt. Die Endverpressung des Dekorpapiers auf eine HDF-Holzfaserplatte erfolgte bei 180°C und einem Druck von 350 N für 12 Sekunden.

### Beispiel 9 (Erfindung)

Ein Dekorpapier wurde wie in Beispiel 8 zunächst mit der Harzsuspension A kernimprägniert. Anschließend erfolgte die erste Beschichtung mit einer Harzsuspension B, die 40 Gew.-% eines runden transparenten Feststoffes (Sovitec 45-63 µm) enthielt. Nach der Zwischentrocknung bei 145°C für 30 Sekunden erfolgte eine zweite Beschichtung mit einer Harzsuspension B, die nun 40 Gew.-% einer Mischung aus 80 Gewichtsanteilen eines ungleichförmigen transparenten Hartstoffes (ALODUR^{®} ZWSK-ST F280) und 20 Gewichtsanteile eines runden transparenten Feststoffes (Swarco 75-106 µm) enthielt. Nach der Endtrocknung des zweifach beschichteten Dekorpapiers bei 145°C auf eine Restfeuchte von 6.7 % erfolgte die Endverpressung auf eine HDF-Holzfaserplatte bei 180°C und einem Druck von 350 N innerhalb von 12 Sekunden.

Die Ergebnisse der Prüfung der Abriebfestigkeit der so hergestellten Laminate sind in der nachfolgenden Tabelle 4 zusammengefasst.

Tabelle 4

| Beispiel | Taber-Werte IP (Umdrehungen) | | Taber-Werte, bezogen auf 1 g/m² Hartstoff- und Feststoffpartikel | | Taber-Werte, bezogen auf 1 g/m² Hartstoffpartikel (ALODUR ZWSK-STF280) |
|---|---|---|---|---|---|
| | | Belegungsdichte | | (Gew.-% Glasperlen) | |
| 6 | 2.800 | 25 g/m² | 112 | 0.0 Gew.-% | 112 |
| 7 | 3.100 | 26 g/m² | 119 | 20 Gew.-% | 149 |
| 8 | 3.100 | 27 g/m² | 115 | 40 Gew.-% | 191 |
| 9 | 4.400 | 25 g/m² | 176 | 40 Gew.-% | 293 |

Aus den Werten der Tabelle 4 ist zu erkennen, dass die Substitution des ungleichförmigen transparenten Hartstoffes durch runde transparente Feststoffpartikel eine Verbesserung der Verschleißfestigkeit der Schicht bringt. So wird mit dem Einsatz von feinen Hartstoffpartikeln alleine lediglich ein Taber-Wert von 2800 erreicht, während bei einer Substitution von 20 % der ungleichförmigen transparenten Hartstoffe durch runde transparente Feststoffe, die zumindest teilweise gröber sind als die Hartstoffe, zu einer Steigerung der Verschleißfestigkeit auf 3100 führt. Eine weitere Substitution der Hartstoffe durch runde transparente Feststoffe, wobei die Dekorschicht in zwei Schritten aufgetragen wird, ist insbesondere dann erfolgreich, wenn zunächst eine Harzsuspension mit der Feinfraktion der runden transparenten Feststoffe aufgetragen wird und anschließend eine Suspension mit den Hartstoffen und der Grobfraktion der transparenten runden Feststoffe aufgetragen wird. In diesem Fall kann bei einer Substitution von 40 Gew.-% der Hartstoffe durch runde transparente Feststoffe in einer bi-modalen Verteilung eine Erhöhung der Verschleißfestigkeit auf einen Taber-Wert von 4400 erreicht werden, was nahezu einer Verdopplung im Vergleich zum Produkt aus Beispiel 6, in dem keine Glasperlen eingesetzt wurden, gleichkommt.

Hinzu kommt der Kostenvorteil durch den Ersatz des teuren Hartstoffes durch den preiswerteren Feststoff sowie die Qualitätsverbesserung in Bezug auf Brillanz und Transparenz der Dekorschicht. Nachteilig in Bezug auf den Pressplattenverschleiß erscheint hier jedoch die oberflächennahe Anordnung der Hartstoffe zu sein. Versuche haben gezeigt, dass dieser Nachteil dadurch vermieden werden kann, dass man diesen Schichtenaufbau der Partikel in umgekehrter Reihenfolge auf einem Overlay-Papier darstellt, wobei dann die partikelfreie Oberfläche des Overlay-Papiers die Pressplatten in bekannter Weise schützt und dennoch ein vergleichbar hoher Taber-Wert erreicht wird.

Bei der umgekehrten Abfolge des Schichtenauftrags auf Dekorpapier, bei der zunächst die Mischung aus Hartstoffen mit der Grobfraktion der runden transparenten Feststoffe aufgetragen wird und anschließend die Feinfraktion der runden transparenten Feststoffe als Suspension aufgetragen wird (Beispiel 8), ist zwar ebenfalls ein positiver Effekt zu sehen, der jedoch darauf beschränkt bleibt, dass der Erhalt der Abriebfestigkeit trotz Substitution der Hartstoffe gewährleistet ist, sodass vor allem ein Kostenvorteil durch den Ersatz der teuren Hartstoffe durch preiswertere Feststoffe sowie den Verschleißschutz für die Pressplatten gegeben ist.

Überraschend wurde darüber hinaus festgestellt, dass Verbesserungen im Vergleich zum Stand der Technik auch dann erzielt werden können, wenn anstatt der im Wesentlichen schneidkantenfreien, runden transparenten Feststoffpartikel teilweise oder vollständig ungleichförmige transparente Feststoffpartikel eingesetzt werden, wenn die Gesamtheit der Feststoffpartikel in einer bi-modalen Kornverteilung mit jeweils einer Grobfraktion und einer Feinfraktion vorliegt. Es können auch Mischungen von im Wesentlichen schneidkantenfeinen runden transparenten Feststoffpartikeln, wie zum Beispiel Vollglaskugeln, mit ungleichförmigen transparenten Feststoffpartikeln eingesetzt werden, wobei vorteilhafte Ergebnisse erzielt werden, solange die Mischungen in einer bi-modalen Kornverteilung mit je einer Grob- und einer Feinfraktion vorliegen.

Der Einsatz von ungleichförmigen transparenten Feststoffen wird in den Beispielen 10 bis 16 beschrieben.

### Beispiele 10 bis 16

Für die Beispiele 10 bis 16 wurden ebenfalls die bereits vorher beschriebenen Harzsuspensionen A und B eingesetzt.

Dabei wurde die Harzsuspension A zum Kernimprägnieren des Overlay-Papiers sowie des Dekorpapiers eingesetzt, während die Harzsuspension B für das Aufbringen der Hartstoffe bzw. Feststoffe verwendet wurde.

Als ungleichförmiger transparenter Hartstoff wurde Edelkorund Weiß (ALODUR^{®} ZWSK-ST 200, Firma Treibacher Schleifmittel GmbH, D-Laufenburg) eingesetzt, während als runder transparenter Feststoff Glasperlen der Firmen Swarco und Sovitec und als ungleichförmiger transparenter Feststoff Quarzsand der Fa. Quarzwerke Frechen eingesetzt wurden. Sowohl die Hartstoffals auch die Feststoffpartikel wurden vor ihrem Einsatz silanisiert. Im Folgenden sind die Siebanalysen und Schüttdichten der eingesetzten Hart- bzw. Feststoffe tabellarisch zusammengefasst.

**Tabelle 5**

| Sieb (µm) | Hartstoff Edelkorund | Feststoff Glasperlen Grob | Feststoff Glasperlen Fein | Feststoff Quarzsand Grob | Feststoff Quarzsand Fein |
|---|---|---|---|---|---|
| | ALODUR^{®} ZWSK-ST 200 | SWARCO 90 - 150 µm | SOVITEC 0 - 50 µm | QW Frechen 90 - 150 µm | QW Frechen 0 - 50 µm |
| 150 | | 4.8 | | 7,8 | |
| 125 | 0,0 | 44.2 | | 47,7 | |
| 106 | 6,0 | | | | |
| 90 | 30,0 | 48.3 | | 37,6 | 0,5 |
| 75 | | 2.0 | 0,1 | | 2,5 |
| 63 | | 0.5 | 0,2 | 6, 9 | 2,6 |
| 53 | 59,0 | | 9,5 | | 46,8 |
| 45 | 3,0 | | 19,8 | | 24,8 |
| 32 | | | 31,7 | | |
| Boden | 2,0 | 0.2 | 38,7 | 0,0 | 22,8 |
| SD (g/cm³) | 1,94 | 1.44 | 1, 36 | 1,31 | 0,99 |

### Beispiel 10 (Vergleich)

Ein Overlay-Papier wurde mit der Harzsuspension A kernimprägniert. Anschließend erfolgte eine Beschichtung des Overlay-Papiers mit der Suspension B, die 40 Gew.-% ALODUR^{®} ZWSK-ST 200 als Hartstoff enthielt. Das Overlay-Papier wurde dann bei 145°C bis auf eine Restfeuchte von 6.0 % getrocknet. Anschließend wurde ein mit der Harzsuspension A imprägniertes und getrocknetes Dekorpapier mit dem Overlay-Papier bedeckt, wobei die Kornseite nach unten zeigte, und bei 180°C für 12 Sekunden bei einem Druck von 350 N auf eine HDF-Holzfaserplatte verpresst.

### Beispiel 11 (Erfindung)

Analog zu Beispiel 10 erfolgte die Beschichtung des kernimprägnierten Overlay-Papiers mit der Harzsuspension B, die 40 Gew.-% einer Mischung aus 60 Gewichtsanteilen eines ungleichförmigen transparenten Hartstoffes (ALODUR^{®}ZWSK-ST 200), 15 Gewichtsanteilen einer Grobfraktion runder transparenter Feststoffe (Glasperlen Grob Swarco 90-150 µm) und 25 Gewichtsanteilen einer Feinfraktion runder transparenter Feststoffe (Glasperlen Fein Swarco 0-50 µm) enthielt. Nach der Trocknung des beschichteten Overlay-Papiers bei 145°C auf eine Restfeuchte von 5.8 % erfolgte das Verpressen des Overlay-Papiers mit der Kornseite nach unten auf ein Dekorpapier und eine HDF-Holzfaserplatte bei 180°C für 12 Sekunden unter einem Druck von 350 N.

### Beispiele 12 bis 16 (Erfindung)

Die Beispiele 12 bis 16 wurden analog zu Beispiel 11 ausgeführt.

Die jeweiligen Zusammensetzungen des Hartstoffs mit den Feststoffen (Glasperlen und/oder Quarzsand) in der Grob- bzw. Feinfraktion ist der nachfolgenden Tabelle 6 zu entnehmen:

**Tabelle 6**

| Beispiel | Hartstoff (Gew.-%) | Feststoff (Gew.-%) | Feststoff (Gew.-%) |
|---|---|---|---|
| | Edelkorund ALODUR^{®} ZWSK-ST 200 µm | Grobfraktionen 90-150 µm | Feinfraktionen 0-50 µm |
| 10 | 100% | - | - |
| 11 | 60% | 15% Glasperlen | 25% Glasperlen |
| 12 | 60% | 15% Glasperlen | 12.5% Glasperlen |
| | | | 12.5% Quarzsand |
| 13 | 60% | 15% Glasperlen | 25% Quarzsand |
| 14 | 60% | 7.5% Glasperlen | 25% Glasperlen |
| | | 7.5% Quarzsand | |
| 15 | 60% | 7.5% Glasperlen | 25% Quarzsand |
| | | 7.5% Quarzsand | |
| 16 | 60% | 15% Quarzsand | 25% Quarzsand |

### Prüfung der Abriebfestigkeit (Taber-Test)

In der folgenden Tabelle 7 sind die Resultate der Abriebtests der Laminatprüfkörper gemäß den Beispielen 10 bis 16 zusammengefasst.

**Tabelle 7**

| Beispiel | Taber-Werte (IP = Umdrehungen) | | Taber-Werte, bezogen auf 1 g/m² Hartstoff- und Feststoff-Partikel | Taber-Werte, bezogen auf 1 g/m² Hartstoffpartikel (ALODUR ZWSK-ST 200) |
|---|---|---|---|---|
| | | Belegungsdichte | (Gew.-% Feststoffpartikel) | |
| 10 | 4.400 | 25 g/m² | 176 (0% G, S, g, s) | 176 |
| 11 | 4.375 | 25 g/m² | 175 (15% G, 25% g) | 291 |
| 12 | 2.950 | 25 g/m² | 118 (15% G, 12.5% g, 12,5% s) | 197 |
| 13 | 4.225 | 25 g/m² | 169 (15% G, 25% s) | 281 |
| 14 | 3.200 | 25 g/m² | 128 (7,5% G, 7,5% S, 25% g) | 213 |
| 15 | 3.150 | 25 g/m² | 126 (7,5% G, 7,5% S, 25% s) | 210 |
| 16 | 3.275 | 25 g/m² | 131 (15% S, 25% s) | 218 |

| | | | | |
|---|---|---|---|---|
| Anmerkung zur Tabelle 7: G = Glasperlen Grobanteil g = Glasperlen Feinanteil S = Quarzsand Grobanteil s = Quarzsand Feinanteil | | | | |

In der Spalte 2 der Tabelle 7 sind die beim Verschleißtest ermittelten Taber-Werte (IP) zusammen mit der Belegungsdichte (g/m²) wiedergegeben. Bei der Belegungsdichte handelt es sich um die Menge an Hartstoff- plus Feststoffpartikel pro m² Dekorschicht. Man erkennt an Beispiel 11, in dem 40 Gew.-% der Hartstoffe durch Glasperlen ersetzt sind, dass trotz der Substitution der Hartstoffe durch Glasperlen nahezu kein Abfall des Taber-Wertes zu verzeichnen ist.

Bei der Substitution der Glasperlen durch Quarzsand (Beispiele 12 bis 16) verschlechtert sich zwar die Abriebfestigkeit, jedoch sind diese Varianten von nicht unerheblichem kommerziellem Interesse, da die Kosten für Quarzsand im Vergleich zu den Glasperlen erheblich geringer sind. So wird bereits beim Ersatz der Hartstoffe durch Glasperlen bei der Fertigung von Laminatböden ein günstigeres Preis/Leistungs-Verhältnis erzielt, was durch die zusätzliche Substitution der Glasperlen durch Quarzsand weiter verbessert werden kann. Eine besonders vorteilhafte Variante ist in Beispiel 13 wiedergegeben, bei der nur der Feinanteil der Glasperlen durch Quarzsand substituiert wurde und dennoch ein Taber-Wert erzielt werden konnte, der vergleichbar ist mit dem Taber-Wert bei ausschließlicher Verwendung von Glasperlen (Beispiel 11).

In der Spalte 4 der Tabelle 7 sind die Taber-Werte, bezogen auf die Verwendung von 1 g Hartstoff pro m² Dekorfläche wiedergegeben, was als Anhaltspunkt für das Preis/LeistungsVerhältnis herangezogen werden kann. Wie das Beispiel 16 zeigt, kann selbst beim vollständigen Ersatz der Glasperlen durch Quarzsand immer noch ein respektabler Taber-Wert erreicht werden. Allgemein ist bei diesen Betrachtungen zu berücksichtigen, dass entsprechend günstige Preis/Leistungs-Verhältnisse nur dann erzielt werden können, wenn der transparente Feststoff (Glasperlen und/oder Quarzsand), der mit den Hartstoffen kombiniert wird, in einer bi-modalen Kornverteilung vorliegt.

Dabei ist die Bimodalität der Kornverteilung der transparenten Feststoffe mit einer Grob- und einer Feinfraktion so zu interpretieren, dass alle unterschiedlichen transparenten Feststoffe als Mischung betrachtet in ihrer Gesamtheit in einer bi-modalen Kornverteilung vorliegen, wobei die Grob- und/oder die Feinfraktion jeweils unterschiedliche oder gleichartige transparente Feststoffe umfassen können.

Ein Nachteil, der im Verlauf der Versuche erkannt wurde, bestand darin, dass bei der Verarbeitung der Gesamtmischungen teilweise erhebliche Staubprobleme auftraten, die überwiegend durch die Feinfraktion der Glasperlen und/oder der Quarzsande bedingt waren. Dabei kam es neben der Staubbelastung am Arbeitsplatz auch zu Feinstaubablagerungen auf den imprägnierten Papieren, so dass nicht nur die Arbeitsbedingungen sondern auch die Produktqualität in Mitleidenschaft gezogen wurden.

Dieses Problem konnte durch die Verwendung von silanisierten, transparenten, glasartigen, geschmolzenen Bariumtitanat-Glaskugeln auf Basis von Bariumoxid, Titandioxid, Siliziumdioxid, Calciumoxid, Zinkoxid und Aluminiumoxid gelöst werden. Dazu wurden in den Beispielen 17 und 18 geschmolzene Kugeln der Fa. Swarco mit der Zusammensetzung 43.5 Gew.-% Bariumoxid, 34.5 Gew.-% Titandioxid, 12.5 Ges.-% Siliziumdioxid, 4.5 Gew.- % Calciumoxid, 1.5 Gew.-% Zinkoxid und 1.5 Gew.-% Aluminiumoxid mit einer Dichte von 4.3 kg/l eingesetzt, die sich durch eine erheblich verminderte Staubentwicklung auszeichneten.

### Beispiele 17 und 18

Das Beispiel 17 wurde analog zu Beispiel 11, das Beispiel 18 analog zu Beispiel 15 durchgeführt. Anstelle der Glasperlen bzw. des Quarzsandes als Feinfraktion der bi-modalen Feststoffmischung wurden die transparenten hochdichten geschmolzenen Kugeln auf Basis Ba-Ti-Si-Ca-Oxid mit geringen Anteilen an Al- und Zn-Oxid eingesetzt.

Die Resultate der Abriebtests sind in der folgenden Tabelle 8 wiedergegeben.

**Tabelle 8**

| Beispiel | Taber-Werte (IP = Umdrehungen) | | Taber-Werte, bezogen auf 1 g/m² Hartstoff- und Feststoff-Partikel | Taber-Werte, bezogen auf 1 g/m² Hartstoffpartikel ZWSK-ST (ALODUR 200) |
|---|---|---|---|---|
| | | Belegungsdichte | (Gew.-% Feststoffpartikel) | |
| 11 | 4.375 | 25 g/m² | 175 (15% G, 25% g) | 291 |
| 17 | 4.425 | 25 g/m² | 177 (15% G, 25% BaTi-g) | 295 |
| 18 | 3.275 | 25 g/m² | 131 (7,5% G, 7,5% S, 25% BaTi-g) | 218 |

| | | | | |
|---|---|---|---|---|
| Anmerkungen zur Tabelle 8: G = Glasperlen (Dichte 2.5 kg/l) Grobanteil S = Quarzsand (Dichte 2.65 kg/l) Grobanteil g = Glasperlen (Dichte 2.5 kg/l) Feinanteil BaTi-g = Glasperlen (Dichte 4.3 kg/l) Feinanteil (Ba-Ti-Si-Ca-Oxid) | | | | |

Neben der erheblich reduzierten Staubbelastung bei der Verarbeitung dieser Gesamtmischungen konnte festgestellt werden, dass die Taber-Werte durch Verwendung der hochdichten Bariumtitanat-Kugeln im Vergleich zu den üblichen Natron-Kalk-Glaskugeln oder den Quarzsanden sogar leicht verbessert wurden.

Als Fazit dieser Versuchsreihen kann festgehalten werden, dass die transparenten Feststoffe aus unterschiedlichen, runden und schneidkantenfreien und/oder ungleichförmigen Materialien bestehen können. Wesentlich ist, dass die Gesamtheit dieser Materialien in einer bi-modalen Kornverteilung vorliegt, bestehend aus einer Grob- und einer Feinfraktion.

Auch wenn bei den oben genannten Beispielen ausschließlich Verschleißschutzschichten für Laminatböden beschrieben wurden, so ist dies nicht als Einschränkung zu sehen, sondern hat seine Ursache lediglich darin, dass in diesem Bereich standardisierte Testmethoden vorhanden sind, um die Vorteile der erfindungsgemäßen Verschleißschicht herauszustellen. So kann die erfindungsgemäße Verschleißschutzschicht ebenfalls vorteilhaft zur Herstellung von verschleißfesten Oberflächen auf Kork, verschleißfesten Bodenbelägen, Parkettfußböden, Möbeloberflächen und Arbeitsplatten eingesetzt werden.

Im Folgenden werden ausgesuchte, in den Beispielen aufgeführte Werte und Resultate anhand von Abbildungen zusätzlich erläutert. Dabei zeigen:
- Figur 1: eine graphische Darstellung der Kornverteilungskurven der Mischung nach Tabelle 1;
- Figur 2: eine graphische Darstellung der Kornverteilungskurven der Mischung nach Tabelle 3;
- Figur 3: eine rasterelektronenmikroskopische Aufnahme eines Schnittbilds einer Laminatbeschichtung nach Beispiel 5; und
- Figur 4: eine rasterelektronenmikroskopische Aufnahme eines Schnittbilds einer Laminatbeschichtung nach Beispiel 9.

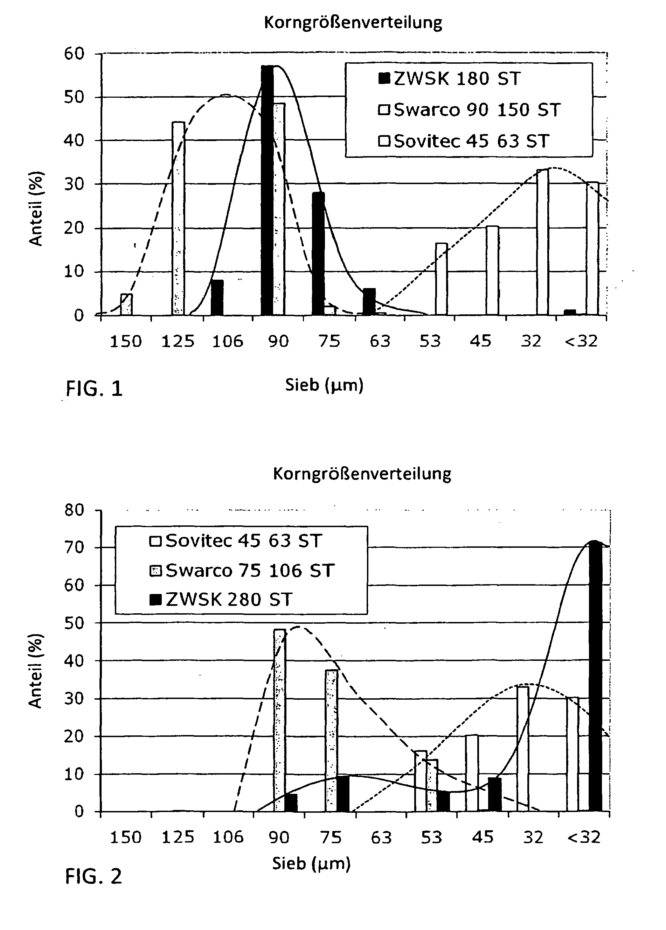

Die Figur 1 zeigt die Korngrößenverteilung des in der Tabelle 1 aufgeführten ungleichförmigen transparenten Hartstoffes (ZWSK-ST 180) sowie der beiden Fraktionen eines runden transparenten Feststoffes (Swarco 90-150 µm und Sovitec 45-63 µm). Im vorliegenden Fall ergibt sich zwischen der Grobfraktion und der Feinfraktion des transparenten runden Feststoffes keine Überschneidung, wobei die Korngrößenverteilung des Hartstoffes so gewählt ist, dass sie zwischen der Grob- und der Feinfraktion des runden transparenten Feststoffes liegt. Dadurch, dass die Grobfraktion des runden transparenten Feststoffes etwas gröber ist als die Korngröße der Hartstoffe, kann der Verschleiß der Pressplatten verringert und es können Beschädigungen der Pressplatten vermieden werden. Die mittlere Korngröße der Grobfraktion der transparenten runden Feststoffpartikel liegt bei ca. 106 µm und die mittlere Korngröße der Feinfraktion bei etwa 30 µm. Damit ist die mittlere Korngröße der Grobfraktion deutlich gröber als die der Feinfraktion.

Die Figur 2 zeigt die Korngrößenverteilung der in der Tabelle 3 zusammengefassten Mischung von Hartstoffen und Feststoffen. In der Grafik ist deutlich zu erkennen, dass es in diesem Fall zu einer Überschneidung der beiden Fraktionen der runden Feststoffpartikel kommt, wobei die mittleren Korngrößen der beiden Fraktionen mit einem Wert von ca. 80 µm für die Grobfraktion und einem Wert von ca. 30 µm für die Feinfraktion immer noch weit auseinander liegen und somit auch hier eine deutliche bimodale Kornverteilung vorliegt. Der Hartstoff weist eine relativ breite Kornverteilung auf, mit Grobanteilen bis zu 90 µm, während der Hauptanteil jedoch im Feinbereich unter 32 µm liegt. Auch in diesem Fall wird der Pressplattenschutz wieder durch die Grobfraktion der runden transparenten Feststoffe gewährleistet, während die Feinfraktion als eine Art Füllstoff agiert und damit die gesamte Beschichtung stabilisiert.

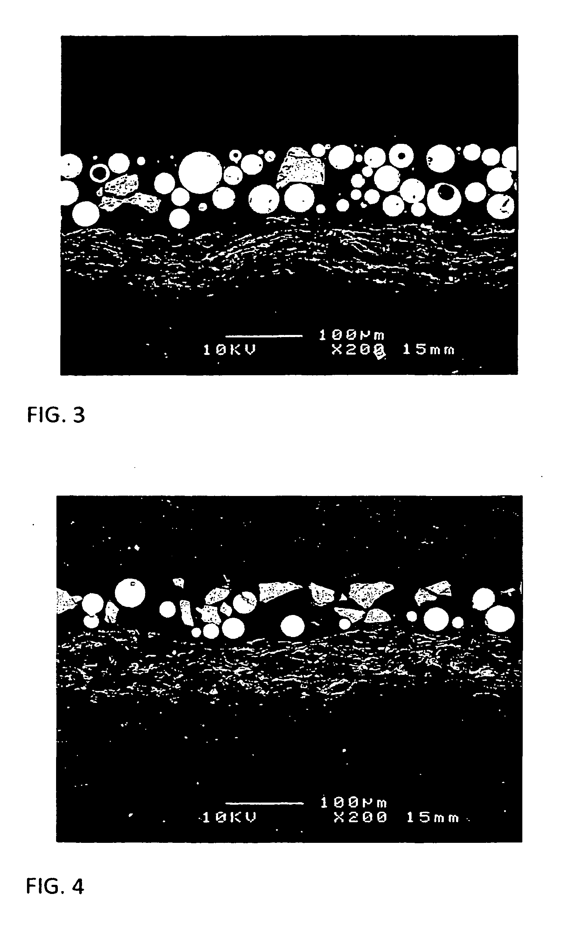

In der Figur 3 ist eine rasterelektronenmikroskopische Aufnahme eines Schnittbildes einer Verschleißschutzschicht nach Beispiel 5 zu sehen. Dabei wurde zunächst das feuchte Dekorpapier mit der Harzsuspension B beschichtet, die 85 Gewichtsanteile ungleichförmigen Hartstoff und 15 Gewichtsanteile der Grobfraktion des runden transparenten Feststoffes enthielt. Nach einem Zwischentrocknen wurde dann eine zweite Beschichtung mit einer Harzsuspension durchgeführt, die lediglich die Feinfraktion der runden transparenten Feststoffe enthielt.

Die Hartstoffe und Feststoffe sind als helle Partikel zu erkennen. Die im Schnittbild zu sehende Kornverteilung sollte der Korngrößenverteilung aus Figur 1 und Tabelle 1 entsprechen. In Bezug auf die Mengenverhältnisse muss hier angemerkt werden, dass der transparente ungleichförmige Hartstoff ein deutlich höheres spezifisches Gewicht aufweist als der runde transparente Feststoff, sodass volumenmäßig ein deutliches Übergewicht des runden Feststoffes zu erwarten ist, auch wenn die gewichtsmäßige Verteilung der Hart- und Feststoffe in der in Figur 3 gezeigten Schicht je 50 Gew.-% betrug. Das spezifische Gewicht des Hartstoffes liegt etwa bei dem doppelten Wert des spezifischen Gewichts des Feststoffes, was die in der Figur 3 zu erkennenden Volumenanteile alleine nicht erklären würde. Hier muss zusätzlich berücksichtigt werden, dass die Figur 3 einen äußerst kleinen Ausschnitt der Gesamtbeschichtung zeigt, in der die Hart- und Feststoffe nicht immer homogen verteilt sind und es zu Anhäufungen von Einzelstoffen kommen kann.

Die Figur 4 zeigt eine rasterelektronenmikroskopische Aufnahme eines Querschnittes einer Verschleißschutzschicht nach Beispiel 9. In diesem Fall wurde ein Dekorpapier in zwei Schritten beschichtet, wobei zunächst eine Harzsuspension mit der Feinfraktion des runden transparenten Feststoffes aufgetragen wurde und die dabei erhaltene Schicht nach einer Zwischentrocknung mit einer zweiten Harzsuspension, die eine Mischung aus ungleichförmigen transparenten Hartstoffen und der Grobfraktion der runden transparenten Feststoffe enthielt, überschichtet wurde. Die Kornverteilung sollte in diesem Fall der Korngrößenverteilung aus Figur 2 und Tabelle 3 entsprechen. Auch in diesem Fall muss darauf hingewiesen werden, dass es sich hierbei um eine Momentaufnahme handelt, die einerseits das eingesetzte Mengenverhältnis und andererseits auch das Größenverhältnis der eingesetzten Mischung nicht klar wiedergibt. In diesem Fall ist allerdings eine gewisse schichtenweise Trennung zwischen den runden transparenten Feststoffen und den ungleichförmigen Hartstoffen zu erkennen, wobei die ungleichförmigen Hartstoffe die äußere Schicht der Beschichtung ausbilden. Dies würde sich jedoch nachteilig auf den Pressplattenverschleiß auswirken, so dass dieser Schichtenaufbau in reziproker Weise insbesondere für ein Overlay-Papier geeignet wäre, wobei dann das Overlay-Papier mit der Partikelseite nach unten auf das Dekorpapier verpresst würde. Dabei würde die partikelfreie Rückseite des Overlay-Papiers die Pressplatten schützen.

## Patentansprüche

1. Verschleißschutzschicht mit einer in eine Kunstharzmatrix eingelagerten Mischung aus ungleichförmigen transparenten Hartstoffpartikeln mit einer Härte nach Mohs von mindestens 6 und transparenten Feststoffpartikeln mit einer Härte nach Mohs von mindestens 3, wobei die Hartstoffpartikel und die Feststoffpartikel unterschiedliche Materialien sind,
**dadurch gekennzeichnet, dass**
die transparenten Feststoffpartikel in einer bi-modalen Korngrößenverteilung mit jeweils einer Grobfraktion und einer Feinfraktion vorliegen.

2. Verschleißschutzschicht nach Anspruch 1,
**dadurch gekennzeichnet, dass**
die transparenten Feststoffpartikel zumindest teilweise im Wesentlichen schneidkantenfreie, runde transparente Feststoffpartikel mit einer Rundheit nach Krumbein von mindestens 0.8 und einer Härte nach Mohs zwischen 3 und 6 umfassen.

3. Verschleißschutzschicht nach Anspruch 1 oder 2,
**dadurch gekennzeichnet, dass**
die mittlere Korngröße der Grobfraktion der Feststoffpartikel um mindestens 40 % größer ist als die mittlere Korngröße der Feinfraktion der Feststoffpartikel und maximal den dreifachen Wert der mittleren Korngröße der ungleichförmigen transparenten Hartstoffpartikel aufweist.

4. Verschleißschutzschicht nach einem der Ansprüche 1 bis 3,
**dadurch gekennzeichnet, dass**
der Anteil der Grobfraktion der Feststoffpartikel, bezogen auf den Gesamtanteil an Grob- und Feinfraktion der Feststoffpartikel, zwischen 5 Ges.-% und 95 Gew.-%, vorzugsweise zwischen 10 Gew.-% und 50 Gew.-%, und besonders bevorzugt zwischen 15 Gew.-% und 30 Gew.-% beträgt.

5. Verschleißschutzschicht nach einem der Ansprüche 1 bis 4,
**dadurch gekennzeichnet, dass**
der Anteil an Grob- und Feinfraktion der Feststoffpartikel in der eingelagerten Gesamtmischung aus Hart- und Feststoffpartikeln 1 Gew.-% bis 99 Gew.-%, bevorzugt 20 Gew.-% bis 60 Gew.-%, besonders bevorzugt 30 Gew.-% bis 50 Gew.-%, beträgt.

6. Verschleißschutzschicht nach einem der Ansprüche 1 bis 5,
**dadurch gekennzeichnet, dass**
die transparenten Feststoffpartikel ausgewählt sind aus der Gruppe Quarzsand, Glas, gesintertes oder geschmolzenes Aluminiumsilikat, Bariumtitanatglas oder Mischungen davon.

7. Verschleißschutzschicht nach einem der Ansprüche 1 bis 6,
**dadurch gekennzeichnet, dass**
die transparenten Feststoffpartikel ein oder mehrere Oxide, Oxynitride oder Mischoxide aus der Gruppe der Elemente Li, Na, K, Ca, Mg, Ba, Sr, Zn, Al, Si, Ti, Nb, La, Y, Ce oder B umfassen.

8. Verschleißschutzschicht nach einem der Ansprüche 1 bis 7,
**dadurch gekennzeichnet, dass**
die ungleichförmigen transparenten Hartstoffpartikel ausgewählt sind aus der Gruppe α-Aluminiumoxid, Schmelzkorund, Sinterkorund, hochgeglühten Tonerden und Sol-Gel-Korund.

9. Verschleißschutzschicht nach einem der Ansprüche 1 bis 8,
**dadurch gekennzeichnet, dass**
die Gesamtmenge an eingelagerten Partikeln in der Kunstharzmatrix 5 Vol.-% bis 70 Vol.-%, bezogen auf die gesamte Verschleißschutzschicht, beträgt.

10. Verschleißschutzschicht nach einem der Ansprüche 1 bis 9,
**dadurch gekennzeichnet, dass**
die Gesamtmenge an eingelagerten Partikeln in der Kunstharzmatrix 2 g/m² bis 100 g/m², bevorzugt 10 g/m² bis 50 g/m², beträgt.

11. Verschleißschutzschicht nach einem der Ansprüche 1 bis 10,
**dadurch gekennzeichnet, dass**
die Partikel vor dem Einbringen in den Kunstharzmatrixwerkstoff einer chemischen Oberflächenbehandlung mit einem organischen oder anorganischen Haftvermittler unterzogen worden sind.

12. Verschleißschutzschicht nach Anspruch 11,
**dadurch gekennzeichnet, dass**
der Haftvermittler ein Silan, insbesondere ein Organosilan, wie z.B. ein Aminoalkylsilan oder ein Aminoalkylalkoxysilan aus der Gruppe Aminopropyltrimethoxysilan, 3-Aminopropyltriethoxysilan, 3-Aminopropylmethyldimethoxysilan, 3-Aminopropylmethyldiethoxysilan und N-(2-Aminoethyl)-3-Aminopropyltrimethoxysilan ist.

13. Verschleißschutzschicht nach Anspruch 11 oder 12,
**dadurch gekennzeichnet, dass**
der Anteil an Silan 0.001 Gew.-% bis 5 Gew.-%, bezogen auf den Gesamtanteil an Hartstoffpartikeln und Feststoffpartikeln, beträgt.

14. Verschleißschutzschicht nach einem der Ansprüche 1 bis 13,
**dadurch gekennzeichnet, dass**
die Kunstharzmatrix ein duroplastischer, thermoplastischer oder elastomerer Kunststoff ist.

15. Verschleißschutzschicht nach einem der Ansprüche 1 bis 14,
**dadurch gekennzeichnet, dass**
die eingelagerten Partikel weitgehend homogen in der Kunststoffmatrix verteilt und zumindest teilweise in mehreren Lagen übereinander angeordnet sind.

16. Verfahren zur Herstellung einer Verschleißschutzschicht nach einem der Ansprüche 1 bis 15, wobei das Verfahren die folgenden Schritte umfasst:
a) Auftragen einer ersten Harzsuspension als erste Schicht auf eine Oberfläche;
b) Zwischentrocknen der ersten Schicht oder Gelieren der ersten Schicht mittels Strahlung;
c) Auftragen einer zweiten Harzsuspension auf die vorgetrocknete bzw. noch feuchte, gelierte erste Schicht; und
d) Endtrocknen der gesamten Beschichtung oder Aushärten der gesamten Beschichtung mittels Strahlung;
**dadurch gekennzeichnet, dass**
entweder die erste oder die zweite Harzsuspension die Grobfraktion zusammen mit den transparenten Hartstoffpartikeln umfasst und die jeweils andere Harzsuspension die Feinfraktion ohne transparente Hartstoffpartikel umfasst.

17. Verfahren nach Anspruch 16,
**dadurch gekennzeichnet, dass**
die Oberfläche ein kernimprägniertes Dekor- oder Overlay-Papier ist, die Zwischen- und Endtrocknung jeweils bei Temperaturen zwischen 120 und 160°C erfolgen und nach dem Endtrocknen eine Verpressung des Dekor- oder Overlay-Papiers auf einer Holzfaserplatte erfolgt.

18. Verfahren nach Anspruch 16,
**dadurch gekennzeichnet, dass**
die Oberfläche eine direkt bedruckte Holzfaserplatte ist und die Aushärtung der Lackschichten mittels Strahlung erfolgt.

19. Verwendung einer Verschleißschutzschicht nach einem der Ansprüche 1 bis 15 zur Herstellung von verschleißfesten Oberflächen auf Holzwerkstoffen, auf imprägnierten Dekorpapieren, auf mit Dekor bedruckten Holzfaserplatten, auf Kork, auf CV- oder Polyvinylchlorid-Belägen zur Herstellung von verschleißfesten Bodenbelägen, Parkettfußböden, Fußbodenlaminaten, Möbeloberflächen oder Arbeitsplatten.

## Claims

1. Wear protection layer with a mixture of non-uniform transparent hard material particles, which are stored in a synthetic resin matrix, and which have a Mohs hardness of at least 6, and transparent solid material particles having a Mohs hardness of at least 3, wherein the hard material particles and the solid material particles are different materials,
**characterized in that**
the transparent solid material particles are present in a bi-modal grain size distribution, each with a coarse fraction and a fine fraction.

2. Wear protection layer according to claim 1,
**characterized in that**
the transparent solid material particles at least partially comprise substantially cutting edge-free round transparent solid material particles with a Krumbein roundness of at least 0.8 and a Mohs hardness of between 3 and 6.

3. Wear protection layer according to claim 1 or 2,
**characterized in that**
the average grain size of the coarse fraction of the solid material particles is at least 40% greater than the average grain size of the fine fraction of the solid material particles and maximally encompasses three times the value of the average grain size of the non-uniform transparent hard material particles.

4. Wear protection layer according to one of claims 1 to 3,
**characterized in that**
the proportion of the coarse fraction of the solid material particles, based on the total proportion of coarse and fine fraction of the solid material particles, is between 5% by weight and 95% by weight, preferably between 10% by weight and 50% by weight, and particularly preferably between 15% by weight and 30% by weight.

5. Wear protection layer according to one of claims 1 to 4,
**characterized in that**
the proportion of coarse and fine fraction of the solid material particles in the stored total mixture of hard and solid material particles is from 1% by weight to 99% by weight, preferably from 20% by weight to 60% by weight, particularly preferably from 30% by weight to 50% by weight.

6. Wear protection layer according to one of claims 1 to 5,
**characterized in that**
the transparent solid material particles are chosen from the group quartz sand, glass, sintered or molten aluminium silicate, barium titanate glass or mixtures thereof.

7. Wear protection layer according to one of claims 1 to 6,
**characterized in that**
the transparent solid material particles comprise one or a plurality of oxides, oxynitrides or mixed oxides from the group of elements Li, Na, K, Ca, Mg, Ba, Sr, Zn, Al, Si, Ti, Nb, La, Y, Ce or B.

8. Wear protection layer according to one of claims 1 to 7,
**characterized in that**
the non-uniform transparent hard material particles are chosen from the group of α-aluminium oxide, fused alumina, sintered alumina, fully annealed clay and sol-gel aluminium oxide

9. Wear protection layer according to one of claims 1 to 8,
**characterized in that**
the total quantity of stored particles in the synthetic resin matrix is from 5% by volume to 70% by volume, based on the entire wear protection layer.

10. Wear protection layer according to one of claims 1 to 9,
**characterized in that**
the total quantity of stored particles in the synthetic resin matrix is from 2 g/m² to 100 g/m², preferably from 10 g/m² to 50 g/m².

11. Wear protection layer according to one of claims 1 to 10,
**characterized in that**
the particles have been subjected to a chemical surface treatment with an organic or inorganic bonding agent prior to the introduction into the synthetic resin matrix material.

12. Wear protection layer according to claim 11,
**characterized in that**
the bonding agent is a silane, in particular an organosilane, such as, e.g., an aminoalkylsilane or an aminoalkylalkoxysilane from the group aminopropyltrimethoxysilane, 3-aminopropyltriethoxysilane, 3-aminopropyl-methyldimethoxysilane, 3-aminopropylmethyldiethoxysilane and N-(2-amino-ethyl)-3-aminopropyltrimethoxysilane.

13. Wear protection layer according to claim 11 or 12,
**characterized in that**
the proportion of silane is from 0.001% by weight to 5% by weight, based on the total proportion of hard material particles and solid material particles.

14. Wear protection layer according to one of claims 1 to 13,
**characterized in that**
the synthetic resin matrix is a duroplastic, thermoplastic or elastomeric synthetic material

15. Wear protection layer according to one of claims 1 to 14,
**characterized in that**
the stored particles are distributed in the synthetic material matrix in a mostly homogeneous manner and are at least partially arranged on top of one another in several layers.

16. Method for producing a wear protection layer according to one of claims 1 to 15, wherein the method comprises the following steps:
a) applying a first resin suspension as a first layer onto a surface;
b) intermediately drying the first layer or gelling the first layer by means of irradiation;
c) applying a second resin suspension onto the pre-dried or still moist, gelled first layer; and
d) final drying of the entire coating or curing of the entire coating by means of irradiation;
**characterized in that**
either the first or the second resin suspension comprises the coarse fraction together with the transparent hard material particles and the respective other resin suspension comprises the fine fraction without transparent hard material particles.

17. Method according to claim 16,
**characterized in that**
the surface is a core-impregnated decor or overlay paper, that the intermediate and final drying in each case take place at temperatures of between 120 and 160°C and that a press-fitting of the decor or overlay paper on a wood fibre board takes place after the final drying.

18. Method according to claim 16,
**characterized in that**
the surface is a directly imprinted wood fibre board and that the curing of the lacquer layers occurs by means of irradiation.

19. Use of a wear protection layer according to one of claims 1 to 15 for producing wear resistant surfaces on wood materials, on impregnated decor papers, on wood fibre boards imprinted with a decor, on cork, on CV or polyvinylchloride coverings for producing wear resistant flooring, parquet floors, floor laminates, furniture surfaces or work surfaces.

## Revendications

1. Couche de protection contre l'usure comprenant un mélange incorporé dans une matrice de résine synthétique constitué de particules de matériau à résistance mécanique élevée transparentes de forme différente avec une dureté selon Mohs d'au moins 6 et de particules de substance solide transparentes avec une dureté selon Mohs d'au moins 3, dans laquelle les particules de matériau à résistance mécanique élevée et les particules de substance solide sont différents matériaux,
**caractérisée en ce que**
les particules de substance solide transparentes sont présentes dans une distribution granulométrique bimodale avec à chaque fois une fraction grossière et une fraction fine.

2. Couche de protection contre l'usure selon la revendication 1,
**caractérisée en ce que**
les particules de substance solide transparentes comprennent au moins partiellement des particules de substance solide transparentes rondes, essentiellement exemptes d'arêtes de coupe avec une rondeur selon Krumbein d'au moins 0,8 et une dureté selon Mohs comprise entre 3 et 6.

3. Couche de protection contre l'usure selon la revendication 1 ou 2,
**caractérisée en ce que**
la granulométrie moyenne de la fraction grossière des particules de substance solide est supérieure d'au moins 40 % à la granulométrie moyenne de la fraction fine des particules de substance solide et présente au maximum la valeur triple de la granulométrie moyenne des particules de matériau à résistance mécanique élevée transparentes de forme différente.

4. Couche de protection contre l'usure selon l'une quelconque des revendications 1 à 3,
**caractérisée en ce que**
la proportion de la fraction grossière des particules de substance solide, par rapport à la proportion totale de fraction grossière et fraction fine des particules de substance solide, se situe entre 5 % en poids et 95 % en poids, de préférence entre 10 % en poids et 50 % en poids, et de manière particulièrement préférée entre 15 % en poids et 30 % en poids.

5. Couche de protection contre l'usure selon l'une quelconque des revendications 1 à 4,
**caractérisée en ce que**
la proportion de fraction grossière et de fraction fine des particules de substance solide dans le mélange entier incorporé constitué de particules de matériau à résistance mécanique élevée et de substance solide se situe entre 1 % en poids et 99 % en poids, de préférence entre 20 % en poids et 60 % en poids, de manière particulièrement préférée entre 30 % en poids et 50 % en poids.

6. Couche de protection contre l'usure selon l'une quelconque des revendications 1 à 5,
**caractérisée en ce que**
les particules de substance solide transparentes sont sélectionnées parmi le groupe de sable de quartz, verre, silicate d'aluminium fritté ou fondu, verre de titanate de baryum ou mélanges de ceux-ci.

7. Couche de protection contre l'usure selon l'une quelconque des revendications 1 à 6,
**caractérisée en ce que**
les particules de substance solide transparentes comprennent un ou plusieurs oxydes, oxynitrures ou oxydes mixtes parmi le groupe des éléments Li, Na, K, Ca, Mg, Ba, Sr, Zn, Al, Si, Ti, Nb, La, Y, Ce ou B.

8. Couche de protection contre l'usure selon l'une quelconque des revendications 1 à 7,
**caractérisée en ce que**
les particules de matériau à résistance mécanique élevée transparentes de forme différente sont sélectionnées parmi le groupe d'oxyde d'α-aluminium, de corindon fondu, de corindon fritté, d'alumines à incandescence élevée et de corindon sol-gel.

9. Couche de protection contre l'usure selon l'une quelconque des revendications 1 à 8,
**caractérisée en ce que**
la quantité totale de particules incorporées dans la matrice de résine synthétique se situe entre 5 % en volume et 70 % en volume, par rapport à la couche de protection contre l'usure entière.

10. Couche de protection contre l'usure selon l'une quelconque des revendications 1 à 9,
**caractérisée en ce que**
la quantité totale de particules incorporées dans la matrice de résine synthétique se situe entre 2 g/m² et 100 g/m², de préférence entre 10 g/m² et 50 g/m².

11. Couche de protection contre l'usure selon l'une quelconque des revendications 1 à 10,
**caractérisée en ce que**
les particules ont été soumises avant l'introduction dans le matériau de matrice de résine synthétique à un traitement superficiel chimique avec un promoteur d'adhérence organique ou inorganique.

12. Couche de protection contre l'usure selon la revendication 11,
**caractérisée en ce que**
le promoteur d'adhérence est un silane, notamment un organosilane, comme par exemple un aminoalkylsilane ou un aminoalkylalkoxysilane parmi le groupe d'aminopropyltriméthoxysilane, de 3-aminopropyltriéthoxysilane, de 3-aminopropylméthyldiméthoxysilane, de 3-aminopropylméthyldiéthoxysilane et de N-(2-aminoéthyl)-3-aminopropyltriméthoxysilane.

13. Couche de protection contre l'usure selon la revendication 11 ou 12,
**caractérisée en ce que**
la proportion de silane se situe entre 0,001 % en poids et 5 % en poids, par rapport à la proportion totale de particules de matériau à résistance mécanique élevée et de particules de substance solide.

14. Couche de protection contre l'usure selon l'une quelconque des revendications 1 à 13,
**caractérisée en ce que**
la matrice de résine synthétique est un matériau synthétique thermodurcissable, thermoplastique ou élastomère.

15. Couche de protection contre l'usure selon l'une quelconque des revendications 1 à 14,
**caractérisée en ce que**
les particules incorporées sont réparties de manière largement homogène dans la matrice synthétique et sont disposées au moins partiellement en plusieurs couches les unes au-dessus des autres.

16. Procédé de fabrication d'une couche de protection contre l'usure selon l'une quelconque des revendications 1 à 15, dans lequel le procédé comprend les étapes suivantes de :
a) application d'une première suspension de résine en tant que première couche sur une surface ;
b) séchage intermédiaire de la première couche ou gélification de la première couche au moyen d'un rayonnement ;
c) application d'une seconde suspension de résine sur la première couche séchée au préalable ou gélifiée encore humide ; et
d) séchage final du revêtement entier ou durcissement du revêtement entier au moyen d'un rayonnement ;
**caractérisé en ce que**
la première ou la seconde suspension de résine comprend la fraction grossière avec les particules de matériau à résistance mécanique élevée transparentes et l'autre suspension de résine respective comprend la fraction fine sans particules de matériau à résistance mécanique élevée transparentes.

17. Procédé selon la revendication 16,
**caractérisé en ce que**
la surface est un papier décoratif ou de revêtement imprégné dans son noyau, les séchages intermédiaire et final s'effectuent chacun à des températures comprises entre 120 et 160°C et une compression du papier décoratif ou de revêtement s'effectue sur un panneau de fibres après le séchage final.

18. Procédé selon la revendication 16,
**caractérisé en ce que**
la surface est un panneau de fibres directement imprimé et le durcissement des couches vernies s'effectue au moyen d'un rayonnement.

19. Utilisation d'une couche de protection contre l'usure selon l'une quelconque des revendications 1 à 15 pour la fabrication de surfaces résistantes à l'usure sur des matériaux de bois, sur des papiers décoratifs imprégnés, sur des panneaux de fibres imprimés d'un décor, sur du liège, sur des revêtements en CV ou chlorure de polyvinyle pour la fabrication de revêtements de sol, revêtements de sol en parquet, stratifiés de revêtement de sol, surfaces de meubles ou plans de travail résistants à l'usure.
